# EUROPÄISCHE PATENTSCHRIFT

(11) **EP 0 538 701 B1**
(45) Veröffentlichungstag und Bekanntmachung des Hinweises auf die Patenterteilung: **29.11.1995**
(21) Anmeldenummer: 92117388.6
(22) Anmeldetag: 12.10.1992
(51) Int. Cl.: B65G 21/02, B65G 21/06, F16B 2/20, F16B 7/04

(54) **Konstruktionsprofil, insbesondere für flexible Montagesysteme**
Construction section, especially for flexible mounting systems
Profilé de construction, en particulier pour systèmes de montages flexibles

(30) Priorität: 19.10.1991 DE 9113044 U
(43) Veröffentlichungstag der Anmeldung: 28.04.1993
(73) Patentinhaber: GRÄSSLIN KG, D-78104 St. Georgen/Schwarzwald (DE)
(72) Erfinder: Spath, Rainer, W-7740 Triberg (DE)
(74) Vertreter: Thoma, Friedrich, Dipl.-Ing.(FH)

(56) Entgegenhaltungen:
- EP-A- 0 203 352
- WO-A-90/02695
- FR-A- 2 194 250
- US-A- 4 572 694

## Beschreibung

Die Erfindung betrifft ein Konstruktionsprofil, insbesondere für flexible Montagesysteme, mit den Merkmalen nach dem Oberbegriff des Patentanspruchs 1.

Zur lösbaren oder nichtlösbaren, hinreichend spannungsfreien Verbindung von zueinander parallelverlaufenden, miteinander in Eingriff stehenden, präzise zueinander fixierten Konstruktionsprofilen, mit insbesondere zueinander unterschiedlichem Querschnitt, sind kraftschlüssige Verbindungen erforderlich, die rationell und wirtschaftlich herstellbar bzw. montierbar sind.

Aus dem DE-U-83 28 226.2 ist ein Trägerprofil zum Herstellen von Aufspannflächen und -tischen, mit beiderseits in die Oberfläche eingearbeiteten parallelen Nuten von T- und/oder TT-förmigem Querschnitt, bekannt, auf dem Klemmprofile mittelbar, mittels sogenannter Klemmschrauben und Gleitmuttern befestigt sind. Diese bekannte kraftschlüssige Verbindung zweier Konstruktionsprofile ist mit dem Nachteil behaftet, daß dort die Fixierung der beiden Konstruktionsprofile zueinander ausschließlich über die mittelbare Schraubverbindung erfolgt, was vielfach bei einer senkrechten Belastung der Verbindungsachsen zu einer Dejustierung der Konstruktionsprofile zueinander führt.

Eine weitere kraftschlüssige Verbindung zweier, miteinander in Eingriff stehender Konstruktionsprofile ist aus der DE-A-38 30 607 bekannt. Auch bei dieser Verbindung erfolgt die kraftschlüssige Verbindung der beiden zueinander fixierten Profile mit Hilfe von Schrauben und speziellen Muttern, die dort in den von außen zugänglichen, längsverlaufenden Nuten und Hohlräumen der Profile angeordnet sind. Diese Art der Verbindung ist nur für speziell ausgebildete Konstruktionsprofile sinnvoll.

Außerdem ist aus der EP-A-0 203 352 ein einem gattungsgemäßen Konstruktionsprofil entsprechendes Führungsprofil für einen Fördergurt bekannt, welches zur Befestigung auf einem starren Tragprofil einstückig mit einem verformbaren Rastmittel versehen ist, zur spielfreien Verbindung und Befestigung des Führungsprofils auf dem Tragprofil. Zusätzliche Mittel und Arbeitsgänge zur Befestigung des Führungsprofils auf dem Tragprofil sind nicht erforderlich. Diese Verbindungstechnik ist jedoch nur für schwach oder verbindungsspezifisch belastbare derartige Profilverbindungen geeignet.

Der Erfindung liegt die Aufgabe zugrunde, eine kraftschlüssige Verbindung für Konstruktionsprofile der eingangs genannten Art zu schaffen, die rationell und wirtschaftlich herstellbar und montierbar ist und bei der desweiteren sichergestellt ist, daß die präzise Lagenfixierung der unmittelbar miteinander in Eingriff stehenden, zueinander ausgerichteten Konstruktionsprofile, durch ein kraftschlüssiges Verbinden der beiden Profile miteinander, nicht beeinträchtigt wird.

Diese Aufgabe wird mit den Merkmalen des Patentanspruchs 1 gelöst und in den Unteransprüchen sind weitere vorteilhafte Einzelheiten beansprucht.

Vorteilhaft bei dieser speziellen Ausbildung des T-förmigen Stegs am Zusatzprofil, für den Eingriff in eine Nut am Basisprofil ist nicht nur, daß dieser mit einem profilaxialverlaufenden Hohlkern versehen ist, dessen seitliche Verbindungswände gelenkartig verformbar sind und dessen Boden verformbar dünnwandig, zum Hohlkern hin gewölbt ausgebildet ist, sondern daß zur Verbindung des Zusatzprofils mit dem Basisprofil der Boden verformt wird. Der Boden kann mittels einer Schraube verformt und lagengesichert werden. Es ist jedoch auch vorgesehen, den verformten bzw. gestreckten Boden mittels einer Schraube, oder einer Niete, oder mittels Schweißpunkten kraftschlüssig zu fixieren bzw. mit dem Basisprofil zu verbinden. Vorteilhaft ist ferner die durch diese Technik erzielbare hinreichend spannungsfreie form- und kraftschlüssige Verbindung eines Zusatzprofils mit einem Basisprofil.

Ausführungsbeispiele von Konstruktionsprofilen und deren kraftschlüssiger Verbindung miteinander sind in den Zeichnungen dargestellt und werden im folgenden näher erläutert. Es zeigen
- Fig. 1: eine Querschnittsansicht eines sogenannten Basisprofils,
- Fig. 2: eine Querschnittsansicht eines sogenannten Zusatzprofils,
- Fig. 3: eine schaubildliche Ansicht zweier miteinander lose in Eingriff stehender Konstruktionsprofile nach Fig. 1 und 2,
- Fig. 4: eine schaubildliche Ansicht zweier miteinander in Eingriff stehender und kraftschlüssig verschraubter Konstruktionsprofile,
- Fig. 5: eine schaubildliche Ansicht zweier miteinander in Eingriff stehender und kraftschlüssig verspannter Konstruktionsprofile,
- Fig. 6: eine schaubildliche Ansicht zweier miteinander in Eingriff stehender und kraftschlüssig vernieteter Konstruktionsprofile und
- Fig. 7: eine schaubildliche Ansicht zweier miteinander in Eingriff stehender und kraftschlüssig verschweißter Konstruktionsprofile.

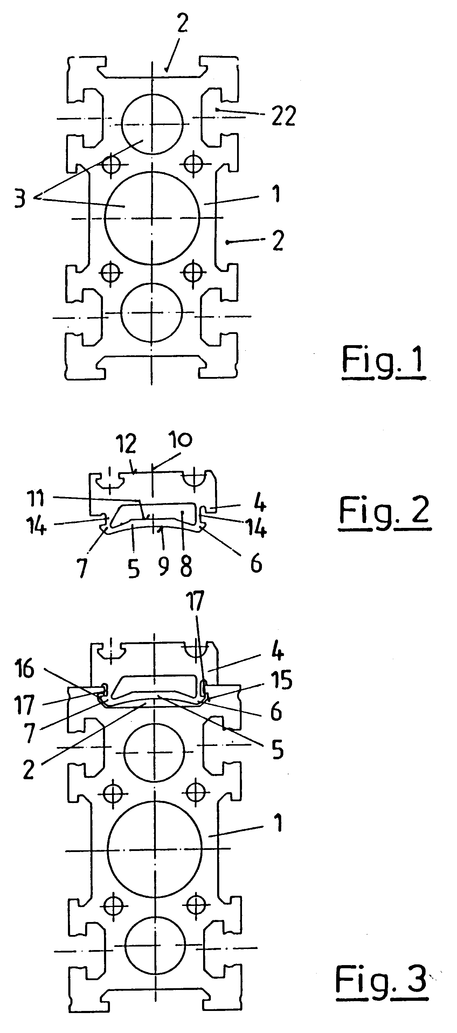

Das, in der Fig. 1 dargestellte, Konstruktionsprofil, das in der folgenden Beschreibung als Basisprofil 1 bezeichnet wird und aus Aluminium oder einem anderen geeigneten oder erforderlichen Werkstoff hergestellt ist, besitzt einen insbesondere rechteckigen Querschnitt und ist im wesentlichen auf allen vier äußeren Seiten mit nach außen hin offenen hinterschnittenen, axialverlaufenden T-förmigen Nuten 2, 22 unterschiedlicher Nutbreite und Nuttiefe versehen. 3 bezeichnet mehrere axialverlaufende Profildurchführungen mit unterschiedlichem Durchmesser.

Die Fig. 2 zeigt ein Konstruktionsprofil, das im folgenden als Zusatzprofil 4 bezeichnet wird. Auch dieses Zusatzprofil 4 ist aus Aluminium oder aus einem anderen geeigneten oder erforderlichen Werkstoff in einem Strangpressverfahren gefertigt. Wie aus dem Profilquerschnitt der Fig. 2 ersichtlich, ist der dortige T-förmige Steg 5 mit den T-hälftigen Stegteilen 6 und 7 mit einem profilaxialverlaufenden Hohlkern 8 versehen. Der Boden 9 des Steges 5 ist relativ dünnwandig und leicht nach innen gewölbt ausgebildet. Außerdem ist dort im Bereich der senkrechten Achse 10 die Bodeninnenseite 11 im Profilrohzustand axialverlaufend parallel zur Profilvorderseite 12. Die Werkstoffqualität dieses Zusatzprofils 4 ist derart beschaffen, daß der Boden 9 unter Krafteinfluß aus seiner Wölbung heraus hinreichend eben streckbar ist.

Die Verbindungswände 14 der Stegteile 6 und 7 sind relativ dünnwandig und gelenkartig verformbar ausgebildet. Insbesondere ist es vorgesehen, daß die Verbindungswände 14 unterschiedlich dick sind, dabei ist die Wand 14 des Stegteils 6 gelenkiger ausgebildet, als die Wand 14 des Stegteils 7.

Die Fig. 3 zeigt die beiden zueinander parallelverlaufenden, miteinander lose in Eingriff stehenden Konstruktionsprofile. Dabei kennzeichnet 1 das Basisprofil und 4 das Zusatzprofil. 5 bezeichnet den T-förmigen Steg im Eingriff mit einer T-förmigen Nut 2 im Basisprofil 1. Im Bereich der Stegteile 6, 7 und den entsprechend benachbarten Nutwänden 15, 16 ist ein relativ kleiner Luftspalt 17 vorgesehen, der eine rationelle und beschädigungsfreie Eingriffsmontage, der beiden axial ineinanderschiebbaren Konstruktionsprofile sicherstellt. Der Luftspalt 17 bewegt sich dabei im Fertigungstoleranzbereich der beiden Profile 1 und 4.

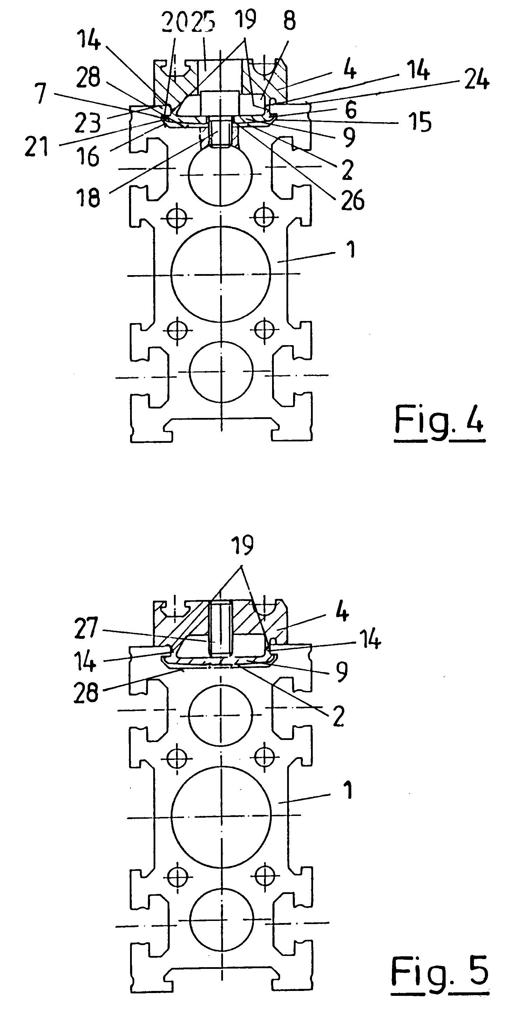

Aus der Fig. 4 ist eine kraftschlüssige Verbindung der beiden Profile 1 und 4 ersichtlich, welche im vorliegenden Falle mittels einer Schraubverbindung erfolgt. Die Schraube 18 zieht dort den Boden 9 gegen die Grund- und Befestigungsfläche 28 der Nut 2. Durch die Verformung, d.h. Streckung des zuvor gewölbten Bodens 9 werden die beiden Stegteile 6, 7 nach außen zu den Nutwänden 15, 16 hin bewegt. Insbesondere wird durch die Verbiegung der Verbindungswand 14 des Stegteils 6, ein hinreichender Formschluß der Verbindungswände 14 mit den dort benachbarten Nutvorsprungsflächen 19 einerseits und den Innenflächen 20 der Stegteile 6, 7 mit den entsprechend benachbarten Hinterschnittflächen 21 der Nut 2 anderseits erzielt. Die vorlieggende kraftschlüssige Verschraubung gewährleistet auch, daß die Montageflächen 23 des Zusatzprofils 4 ausreichend formschlüssig auf der Montagefläche 24 des Basisprofils 1 aufliegen.

Die Verformung des Bodens 9 aus der gewölbten Ausgangslage heraus in die gerade Streckung des Bodens 9 gewährleistet die Überbrückung der vorgesehenen Eingriffstoleranzen der beiden Profile 1 und 4, sodaß ein Form-schluß im Bereich der Stegteile 6 und 7 zu den jeweils benachbarten Hinterschnittflächen 21 der Nut 1 sichergestellt wird.

Die Schraube 18 wird über eine entsprechende Freibohrung 25 in den Hohlkern 8 und damit in das Führungsloch 26 eingeführt. Profillängsverlaufend können derartige Schraubverbindungen zweckmäßigerweise ca. alle 100 mm vorgesehen sein.

Die Fig. 5 zeigt eine weitere kraftschlüssige Verbindungsmöglich zweier Konstruktionsprofile, eines Basisprofils 1 und eines Zusatzprofils 4, miteinander. Die kraftschlüssige Verbindung wird hier über eine Druckeinwirkung erzielt. 27 zeigt eine sogenannte Inbusschraube im Gewindeeingriff mit dem Zusatzprofil 4, welche den Boden 9 verformt und gegen die Grund- und Befestigungsfläche 28 der Nut 2 des Basisproflls 1. Mit dem Verformen des Bodens 9 erfolgt auch wieder eine Verbiegung der Verbindungswand 14 hin zu einem Formschluß mit den benachbarten Nutvorsprungsflächen 19 der Nut 2. Alle weiteren Einzelheiten hinsichtlich des formschlüssigen Sitzes der beiden Profile 1 und 4 zueinander entsprechen hier den bereits beschriebenen Einzelheiten der Fig. 4.

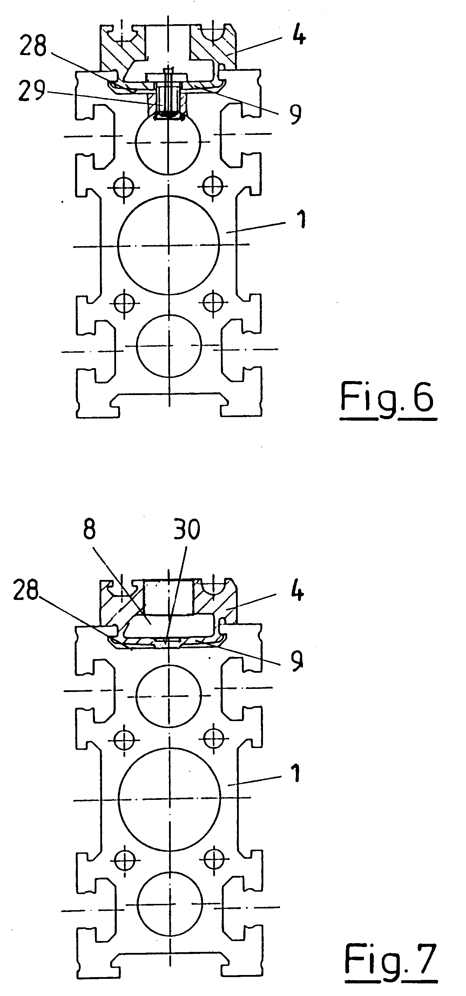

Die Fig. 6 zeigt eine, im Gegensatz zu den lösbaren kraftschlüssigen Verbindungen, gemäß den Fig. 4 und 5, nichtlösbare kraftschlüssige Nietverbindung der miteinander in Eingriff stehenden Profile 1 und 4. Zur Erzielung der bereits unter der Fig. 4 und 5 beschriebenen Formschlüssigkeit im Bereich des Eingriffs, durch die Verformung des Bodens 9, werden in bestimmten axialverlaufenden Abständen zueinander sogenannte Becherblindnieten oder Kerbnägel gesetzt, welche den zuvor gegen die Grund- oder Befestigungsfläche 28 hin verformten Boden 9 intermittierend fixieren.

Aus der Fig. 7 ist eine weitere nichtlösbare kraftschlüssige Verbindung, insbesondere eine Punktschweißverbindung, zweier Profile 1 und 4 miteinander ersichtlich. Bei dieser Verbindungstechnik wird nach der erforderlichen, zuvor bereits ausführlich beschriebenen, Verformung des Bodens 9, zur Erzielung des die beiden Profile 1 und 4 zueinander lagenfixierenden Formschlusses in Teilen des Eingriffs- und im Parallelauflagenbereich, der Boden 9 in bestimmten axialverlaufenden Abständen zueinander punktverschweißt. Im Bereich einer Schweißstelle 30 wird dort der dünne Boden 9 punktuell bis auf die Grund- und Befestigungsfläche 28 gedrückt und dann auf dieser Fläche 28 verschweißt.

Es liegt im Rahmen der Erfindung, daß zur kraftschlüssigen Verbindung von miteinander in Eingriff stehenden Konstruktionsprofilen mit den zuvor beschriebenen Merkmalen, nach dem Verformen des Bodens 9 die jeweilige Formlage des Bodens 9 mittels eines axial in den Hohlkern 8 getriebenen Keils oder eines anderweitigen Bodenfixierelementes oder -mittels lagengesichert wird.

Außerdem liegt es im Rahmen der Erfindung, daß der Querschnitt der miteinander zu verbindenden Konstruktionsprofile den jeweiligen Erfordernissen entsprechend verschieden sein kann.

## Patentansprüche

1. Konstruktionsprofil, in Form eines Zusatzprofils (4), mit einer stegförmigen einseitig auslenkbaren Einrichtung für den Eingriff in eine axial verlaufende T-förmige Nut (2) in einem Basisprofil (1), zur spielfreien kraftschlüssigen Verbindung des Zusatzprofils (4) mit dem Basisprofil (1), insbesondere für flexible Montagesysteme, **dadurch gekennzeichnet,** daß am Zusatzprofil (4) ein T-förmiger Steg (5) mit T-hälftigen Stegteilen (6, 7) angeordnet ist, daß der Steg (5) mit einem profilaxialverlaufenden Hohlkern (8) versehen ist, daß die Verbindungswände (14) der Stegteile (6 und 7) gelenkartig verformbar ausgebildet sind, daß der Boden (9) des Stegs (5) verformbar dünnwandig, zum Hohlkern (8) hin gewölbt ausgebildet und zur Verbindung mit dem Basisprofil (1) in der Nut (2) verformbar ist.

2. Konstruktionsprofil nach Anspruch 1, dadurch gekennzeichnet, daß die Bodeninnenseite (11) des Stegs (5) des Zusatzprofils (4) im Profilrohzustand axialverlaufend parallel zur Profilvorderseite (12) des Zusatzprofils (4) ist.

3. Konstruktionsprofil nach Anspruch 1 oder 2, dadurch gekennzeichnet, daß der Boden (9) des Zusatzprofils (4) mittels einer auf Zug beanspruchten Schraube (18) verformbar ist.

4. Konstruktionsprofil nach Anspruch 1 oder 2, dadurch gekennzeichnet, daß der Boden (9) des Zusatzprofils (4) mittels einer auf Druck beanspruchten Inbusschraube (27) verformbar ist.

5. Konstruktionsprofil nach Anspruch 1 oder 2, dadurch gekennzeichnet, daß der gestreckt verformte Boden (9) des Zusatzprofils (4) mittels einer auf Zug beanspruchten Niete, insbesondere einer Becherblindniete (29), oder eines Kerbnagels zum Basisprofil (1) kraftschlüssig fixierbar bzw. verbindbar ist.

6. Konstruktionsprofil nach Anspruch 1 oder 2, dadurch gekennzeichnet, daß der gestreckt verformte Boden (9) des Zusatzprofils (4) mittels axial intermittierend gesetzter Schweißpunkte in der verformten Lage zum Basisprofil (1) fixierbar und mit diesem stoffschlüssig verbindbar ist.

## Claims

1. Structural profile, in the form of an auxiliary profile (4), with a strip-shaped arrangement deflectable on one side for engagement in a T-shaped slot (2) running axially in a base profile (1), for play-free force-locking connection of the auxiliary profile (4) with the base profile (1), in particular for flexible assembly systems, characterised in that a T-shaped strip (5) with half T strip parts (6, 7) is disposed on the auxiliary profile (4), in that the strip (5) is provided with a hollow core (8) running in the axis of the profile, in that the connecting walls (14) of the strip parts (6 and 7) are deformable in the manner of hinges, in that the bottom (9) of the strip (5) is deformably thin walled, curved towards the hollow core (8) and for connection with the base profile (1) is deformable in the slot (2).

2. Structural profile according to claim 1, characterised in that in the untreated state of the profile the inside (11) of the bottom of the strip (5) of the auxiliary profile (4) is parallel with the profile front side (12) of the auxiliary profile (4) running axially.

3. Structural profile according to claim 1 or 2, characterised in that the bottom (9) of the auxiliary profile (4) is deformable by means of a screw (18) which can be subjected to a tensile load.

4. Structural profile according to claim 1 or 2, characterised in that the bottom (9) of the auxiliary profile (4) is deformable by means of a hollow socket-head screw (27) which can be subjected to a compressive load.

5. Structural profile according to claim 1 or 2, characterised in that the stretched deformed bottom (9) of the auxiliary profile (4) can be fixed or connected to the base profile (1) in a force-locking manner by means of a rivet subjected to a tensile loading, in particular a blind cup rivet (29), or a notched nail.

6. Structural profile according to claim 1 or 2, characterised in that the stretched deformed bottom (9) of the auxiliary profile (4) can be fixed to the base profile (1) and connected with the latter in a material-locking manner by means of axially intermittently set spot welds in the deformed position.

## Revendications

1. Profilé de construction, en forme d'un profilé additionnel (4), comportant d'un côté un dispositif en forme d'entretoise flexible, destiné à entrer en prise dans une gorge (2) en forme de T, s'étendant axialement dans un profilé de base (1), afin de réaliser un assemblage dynamique, sans jeu entre le profilé additionnel (4) et le profilé de base (1), en particulier pour des systèmes de montage flexibles, caractérisé en ce que, sur le profilé additionnel (4), est disposée une entretoise en forme de T (5) présentant des moitiés de T (6, 7), en ce que l'entretoise (5) est munie d'un noyau creux (8) s'étendant dans l'axe du profilé, en ce que les parois de liaison (14) des parties (6, 7) de l'entretoise sont déformables à la manière d'articulations, en ce que le fond (9) de l'entretoise (5), dont la paroi est mince et déformable, est bombé en direction du noyau creux et est déformable à l'intérieur de la gorge (2) en vue de son assemblage au profilé de base (1).

2. Profilé de construction selon la revendication 1, caractérisé en ce que le côté intérieur (11) du fond de l'entretoise (5) du profilé additionnel (4) est axialement parallèle, à l'état initial du profilé, par rapport au côté antérieur (12) du profilé additionnel (4).

3. Profilé de construction selon la revendication 1 ou 2, caractérisé en ce que le fond (9) du profilé additionnel (4) est déformable au moyen d'une vis (18) soumise à une sollicitation de traction.

4. Profilé de construction selon la revendication 1 ou 2, caractérisé en ce que le fond (9) du profilé additionnel (4) est déformable au moyen de vis (27) à six pans creux soumise à une sollicitation de traction

5. Profilé de construction selon la revendication 1 ou 2, caractérisé en ce que le fond (9) du profilé additionnel (4) peut être fixé ou assemblé de manière dynamique au profilé de base (1) au moyen d'un rivet placé sous une sollicitation de traction, en particulier un rivet borgne (29) ou un clou cannelé.

6. Profilé de construction selon la revendication 1 ou 2, caractérisé en ce que le fond (9) déformé à plat du profilé additionnel (4) peut être fixé au profilé de base et intégré à celui-ci dans la position déformée dudit fond, au moyen de points de soudure séparés par des intervalles.
